# EUROPÄISCHE PATENTANMELDUNG

(11) **EP 0 968 654 A2**
(43) Veröffentlichungstag der Anmeldung: **05.01.2000**
(21) Anmeldenummer: 99112846.3
(22) Anmeldetag: 02.07.1999
(51) Int. Cl.: A23C 19/076

(54) **Frischkäsezubereitung**

(30) Priorität: 03.07.1998 DE 19831212; 03.07.1998 DE 29812362 U
(71) Anmelder: Ranka, Amit, 10717 Berlin (DE)
(72) Erfinder: Ranka, Amit, 10717 Berlin (DE)
(74) Vertreter: Heinze, Ekkehard, Dipl.-Phys. Dr.

(57) **Zusammenfassung**

Frischkäsezubereitung mit einer konservierungsmittelfreien Frischkäsemasse, insbesondere mit einem Fettgehalt von 45% oder mehr, und mindestens einer frischen und/oder einer pikant eingelegten geschmacksprägenden Zutat, wobei mindestens eine Zutat einen Anteil von 5 Masse-% oder mehr, bezogen auf die Gesamtmasse der Frischkäsezubereitung, hat.

## Beschreibung

Die Erfindung betrifft eine industriell gefertigte Frischkäsezubereitung mit einer konservierungsmittelfreien Frischkäsemasse und mindestens einer geschmacksprägenden Zutat.

Frischkäse und Frischkäsezubereitungen sind Molkereiprodukte, die sich großer Beliebtheit erfreuen und unter den Milchprodukten einen erheblichen Marktanteil haben. Marktbeherrschend bei den industriell hergestellten Frischkäsezubereitungen sind etablierte Standardprodukte, bei denen der Frischkäsemasse bestimmte Kräutermischungen - insbesondere nach französischen oder französischer Vorbilder nachahmenden Rezepturen - beigemischt sind. Hierbei werden in produktionstechnisch vorteilhafter und eine relativ lange Haltbarkeit der Frischkäsezubereitung gewährleistender Weise tiefgefrorene bzw. gefriergetrocknete Kräuter, gegebenenfalls in Mischung mit getrockneten Kräutern, eingesetzt.

Diese bekannten und marktgängigen Frischkäsezubereitungen ähneln sich geschmacklich stark und eröffnen dem Frischkäseliebhaber in keiner Weise die Möglichkeit des Erlebens neuartiger Geschmacksnuancen. Zudem lassen Intensität und Qualität des Geschmacks dieser Frischkäsezubereitungen für den Feinschmecker zu wünschen übrig.

Der Erfindung liegt daher die Aufgabe zugrunde, geschmacklich hochwertige und neuartige Frischkäsezubereitungen bereitzustellen, mit denen die Marktposition der Frischkäsezubereitungen ausgebaut werden kann.

Diese Aufgabe wird durch eine Frischkäsezubereitung mit den Merkmalen des Anspruchs 1 gelöst.

Die Erfindung schließt zum einen den grundsätzlichen Gedanken ein, unter bewußter Abkehr vom Einsatz konservierungsmittelhaltiger Frischkäsemassen (und damit unter bewußtem Verzicht auf eine relativ lange Haltbarkeit der Zubereitung) ausschließlich konservierungsmittelfreie Massen als Grundlage einzusetzen. Sie schließt weiter den Gedanken ein, dieser Frischkäsemasse einen ungewöhnlich hohen Anteil an frischen und/oder pikant eingelegten Zutaten beizumischen und damit eine hohe Geschmacksqualität und -intensität zu erreichen.

In bevorzugten Ausführungen der Erfindung werden Zutaten eingesetzt, die als solche oder jedenfalls in den vorgeschlagenen Mischungen für die industrielle Herstellung von Frischkäsezubereitungen bisher nicht eingesetzt wurden. Damit werden dem angestammten Kundenkreis des Produktes Frischkäsezubereitungen neue Geschmacksnuancen erschlossen und somit zusätzliche Kaufanreize geboten, und zudem wird durch das Angebot interessanterer oder neuartiger Geschmacksnuancen ein dem Produkt bisher eher zurückhaltend gegenüberstehender potentieller Käuferkreis angesprochen und zum Kauf angeregt.

Gemäß einer ersten bevorzugten Ausführungslinie der Erfindung werden als geschmacksprägende Zutat ein Frischgemüse, insbesondere Ruccola, Peperoni, Blattspinat, Meerrettich, Zucchini oder Artischocken, und/oder frische Kräuter, insbesondere Koriander, Basilikum, Dill, Curryblätter oder Petersilie, bzw. frische Zwiebeln oder frischer Knoblauch eingesetzt.

Gemäß einer weiteren bevorzugten Ausführungslinie werden als geschmacksprägende Zutaten pikant - speziell nach italienischen oder anderen südeuropäischen oder aber asiatischen, speziell indischen, Rezepturen - eingelegtes Gemüse oder Obst, insbesondere Tomaten, Oliven, grüne Mangos, Auberginen, Zucchini oder Artischockenherzen, oder auch eingelegte Kapern oder Meerrettich eingesetzt.

Während erfindungsgemäß die Einsatzmenge mindestens einer Zutat bei etwa 5 Masse-% oder mehr, bezogen auf die Gesamtmasse der Frischkäsezubereitung, liegt, ist sie bei Einsatz mehrerer geschmacksprägender Zutaten bevorzugt bei mindestens 10 Masse-% angesetzt.

Die eingesetzte Frischkäsemasse sollte einen Fettgehalt von mindestens 45%, bevorzugt aber einen Fettgehalt von etwa 60%, haben, um insgesamt eine abgerundete Geschmackswirkung zu erzielen.

Die geschmacksprägenden Zutaten werden gehackt und unmittelbar vor der Abpackung gründlich unter die Frischkäsemasse gemengt, wodurch ein Sauerstoffkontakt weitgehend unterbunden wird und auch bei Einsatz frischer, unbehandelter Zutaten eine akzeptable Haltbarkeitsdauer erzielt werden kann. Die Portionierung und Verpackung erfolgt in Abstimmung auf den Abnehmerbedarf in Haushalts- oder Großabnehmermengen.

In einer vorteilhaften Ausführung sind als geschmacksprägende Zutaten frischer Koriander und frischer Peperoni mit Anteil von jeweils 5 Masse-% oder mehr sowie frische rote Zwiebeln mit einem Anteil von 3 Masse-% oder mehr vorgesehen.

In einer weiteren Ausführung sind als geschmacksprägende Zutaten frischer Ruccola mit einem Anteil von 5 Masse-% oder mehr und frischer Knoblauch mit einem Anteil von 1 Masse-% oder mehr vorgesehen.

In einer weiteren Ausführung sind als geschmacksprägende Zutaten frischer Dill mit einem Anteil von 4 Masse-% oder mehr, Sahne-Meerrettich mit einem Anteil von 3 Masse-% oder mehr und eingelegte Kapern mit einem Anteil 3 Masse-% oder mehr vorgesehen.

In einer weiteren Ausführung sind als geschmacksprägende Zutaten frische Curryblätter, frische, rote Zwiebeln mit einem Anteil von jeweils 5 Masse-% oder mehr sowie Senfkörner mit einem Anteil von 0,5 Masse-% oder mehr vorgesehen, wobei insbesondere die Curryblätter und Senfkörner in Öl geröstet sind.

In einer weiteren Ausführung sind als geschmacksprägende Zutaten auf italienische Art eingelegte Tomaten mit einem Anteil von 5 Masse-% oder mehr und frischer Basilikum mit einem Anteil von 3 Masse-% oder mehr vorgesehen.

In einer weiteren Ausführung sind als geschmacksprägende Zutaten auf italienische, griechische oder spanische Art eingelegte Oliven mit einem Anteil von 3 Masse-% oder mehr und in Salzwasser eingelegte, geschälte Mandeln mit einem Anteil von 2 Masse-% oder mehr vorgesehen.

In einer weiteren Ausführung sind als geschmacksprägende Zutat auf indische Art eingelegte grüne Mangos mit einem Anteil von 3 Masse-% oder mehr vorgesehen.

In einer weiteren Ausführung sind als geschmacksprägende Zutaten auf italienische Art eingelegte Auberginen mit einem Anteil von 0,2 Masse-% oder mehr vorgesehen.

In einer weiteren Ausführung sind als geschmacksprägende Zutat auf italienische Art eingelegte Zucchini mit einem Anteil von 5 Masse-% oder mehr vorgesehen.

In einer weiteren Ausführung sind als geschmacksprägende Zutaten auf italienische Art eingelegte Artischockenherzen mit einem Anteil von 5 Masse-% oder mehr und frische Petersilie mit einem Anteil von 2 Masse-% oder mehr vorgesehen.

Vorteile und Zweckmäßigkeiten der Erfindung ergeben sich im übrigen aus der nachfolgenden Beschreibung bevorzugter Ausführungsbeispiele.

### Beispiel 1: Frischkäsezubereitung mit Koriander, roten Peperoni und roten Zwiebeln

Zutaten für 1 kg Frischkäse mit 60% Fett:
- 100g: gehackter frischer Koriander
- 50g: gehackte frische Peperoni
- 100g: gehackte rote Zwiebeln
- 5g: Salz

### Beispiel 2: Frischkäsezubereitung mit Ruccola und Knoblauch

Zutaten für 1kg Frischkäse mit 60% Fett:
- 100g: gehackter frischer Ruccola
- 20g: gehackter frischer Knoblauch
- 2g: gemahlener schwarzer oder roter Pfeffer
- 5g: Salz

### Beispiel 3: Frischkäsezubereitung mit Dill, Kapern und Meerrettich

Zutaten für 1kg Frischkäse mit 60% Fett:
- 83g: gehackter, frischer Dill
- 60g: Sahnemeerrettich (z.B. Firma Kühne)
- 60g: gehackte, eingelegte Kapern (z.B. Firma Jaculli)
- 6g: Salz

### Beispiel 4: Frischkäsezubereitung mit Curryblättern, roten Zwiebeln und Senfkörnern

Zutaten für 1kg Frischkäse mit 60% Fett:
- 100g: gehackte, frische Curryblätter
- 100g: gehackte, frische, rote Zwiebeln
- 10g: Senfkörner
- 5g: Salz

### Beispiel 5: Frischkäsezubereitung mit Tomaten und Basilikum

Zutaten für 1kg Frischkäse mit 60% Fett:
- 100g: italienische, gehackte, eingelegte und getrocknete Tomaten (z.B. Firma Jaculli)
- 66g: gehackter, frischer Basilikum
- 5g: Salz

### Beispiel 6: Frischkäsezubereitung mit Oliven und Mandeln

Zutaten für 1kg Frischkäse mit 60% Fett:
- 75g: italienische, gehackte, eingelegte Oliven (z.B. Firma Jaculli)
- 25g: in Salzwasser eingelegte, gehackte und geschälte Mandeln
- 5g: Salz

### Beispiel 7: Frischkäsezubereitung mit grüner Mango

Zutaten für 1kg Frischkäse mit 60% Fett:
- 60g: nach indischer Art eingelegte, gehackte, grüne Mango (z.B. Firma PATAK'S)
- 5g: Salz

### Beispiel 8: Frischkäsezubereitung mit Auberginen und Knoblauch

Zutaten für 1kg Frischkäse mit 60% Fett:
- 100g: italienische, eingelegte und gehackte Auberginen (z.B. Firma Jaculli)
- 5g: gehacker, frischer Knoblauch

### Beispiel 9: Frischkäsezubereitung mit Zucchini

Zutaten für 1kg Frischkäse mit 60% Fett:
- 100g: italienisch, eingelegte und gehackte Zucchini (z.B. Firma Jaculli)
- 5g: Salz

### Beispiel 10: Frischkäsezubereitung mit Artischocken und Petersilie

Zutaten für 1kg Frischkäse mit 60% Fett:
- 100g: nach italienischer Art eingelegte, gehackte Artischockenherzen (z.B. Firma Artigiana)
- 50g: gehackte, frische Petersilie
- 5g: Salz

### Beispiel 11: Frischkäsezubereitung mit Oliven und roten Zwiebeln

Zutaten für 1kg Frischkäse mit 60% Fett:
- 100g: eingelegte Oliven
- 45g: frische rote Zwiebeln
- 5g: Salz

## Patentansprüche

1. Frischkäsezubereitung mit einer konservierungsmittelfreien Frischkäsemasse, insbesondere mit einem Fettgehalt von 45% oder mehr, und mindestens einer frischen und/oder einer pikant eingelegten geschmacksprägenden Zutat, wobei mindestens eine Zutat einen Anteil von 5 Masse-% oder mehr, bezogen auf die Gesamtmasse der Frischkäsezubereitung, hat.

2. Frischkäsezubereitung nach Anspruch 1,
**dadurch gekennzeichnet**,
daß als geschmacksprägende Zutat ein Frischgemüse, insbesondere Ruccola, Peperoni, Blattspinat, Meerrettich, Zucchini oder Artischocken, und/oder ein Frischkraut, insbesondere Koriander, Basilikum, Curryblätter, Dill oder Petersilie und/oder frische Zwiebeln und/oder frischer Knoblauch vorgesehen sind.

3. Frischkäsezubereitung nach Anspruch 1 oder 2,
**dadurch gekennzeichnet**,
daß als geschmacksprägende Zutat ein pikant, insbesondere auf asiatische oder südeuropäische Art, eingelegtes Gemüse oder Obst, insbesondere Tomaten, Oliven, grüne Mangos, Auberginen, Zucchini oder Artischockenherzen, Meerrettich oder Kapern, vorgesehen sind.

4. Frischkäsezubereitung nach einem der vorangehenden Ansprüche,
**dadurch gekennzeichnet**,
daß mehrere geschmacksprägende Zutaten in einem Anteil von insgesamt 10 Masse-% oder mehr, bezogen auf die Gesamtmasse der Frischkäsezubereitung, vorgesehen sind.

5. Frischkäsezubereitung nach einem der vorangehenden Ansprüche,
**dadurch gekennzeichnet**,
daß die Frischkäsemasse einen Fettgehalt von 60% aufweist.

6. Frischkäsezubereitung nach Anspruch 2 und Anspruch 4 oder 5,
**dadurch gekennzeichnet**,
daß als geschmacksprägende Zutaten frischer Koriander und frische rote Zwiebeln mit einem Anteil von jeweils 5 Masse-% oder mehr sowie frischer Peperoni mit einem Anteil von 3 Masse-% oder mehr vorgesehen sind.

7. Frischkäsezubereitung nach Anspruch 2 oder 5,
**dadurch gekennzeichnet**,
daß als geschmacksprägende Zutaten frischer Ruccola mit einem Anteil von 5 Masse-% oder mehr und frischer Knoblauch mit einem Anteil von 1 Masse-% oder mehr vorgesehen sind.

8. Frischkäsezubereitung nach Anspruch 2, 3 und 4 oder 5,
**dadurch gekennzeichnet**,
daß als geschmacksprägende Zutaten frischer Dill mit einem Anteil von 4 Masse-% oder mehr, Sahne-Meerrettich mit einem Anteil von 3 Masse-% oder mehr und eingelegte Kapern mit einem Anteil von 3 Masse-% oder mehr vorgesehen sind.

9. Frischkäsezubereitung nach Anspruch 2 und Anspruch 4 oder 5,
**dadurch gekennzeichnet**,
daß als geschmacksprägende Zutaten frische Curryblätter, frische rote Zwiebeln mit einem Anteil von jeweils 5 Masse-% oder mehr sowie Senfkörner mit einem Anteil von 0,5 Masse-% oder mehr vorgesehen sind.

10. Frischkäsezubereitung nach Anspruch 9,
**dadurch gekennzeichnet**,
daß Curryblätter und Senfkörner in Öl geröstet sind.

11. Frischkäsezubereitung nach Anspruch 2, 3 und 4 oder 5, **dadurch gekennzeichnet**,
daß als geschmacksprägende Zutaten auf italienische Art eingelegte Tomaten mit einem Anteil von 5 Masse-% oder mehr und frischer Basilikum mit einem Anteil von 3 Masse-% oder mehr vorgesehen sind.

12. Frischkäsezubereitung nach Anspruch 3 oder 5,
**dadurch gekennzeichnet**,
daß als geschmacksprägende Zutaten auf italienische, griechische oder spanische Art eingelegte Oliven mit einem Anteil von 4 Masse-% oder mehr und in Salzwasser eingelegte, geschälte Mandeln mit einem Anteil von 1 Masse-% oder mehr vorgesehen sind.

13. Frischkäsezubereitung nach Anspruch 3 oder 5,
**dadurch gekennzeichnet**,
daß als geschmacksprägende Zutat auf indische Art eingelegte grüne Mangos mit einem Anteil von 3 Masse-% oder mehr vorgesehen sind.

14. Frischkäsezubereitung nach Anspruch 3 oder 5,
**dadurch gekennzeichnet**,
daß als geschmacksprägende Zutaten auf italienische Art eingelegte Auberginen mit einem Anteil von 5 Masse-% oder mehr vorgesehen sind.

15. Frischkäsezubereitung nach Anspruch 3 oder 5,
**dadurch gekennzeichnet**,
daß als geschmacksprägende Zutat auf italienische Art eingelegte Zucchini mit einem Anteil von 5 Masse-% oder mehr vorgesehen sind.

16. Frischkäsezubereitung nach Anspruch 2 und 3 oder 5,
**dadurch gekennzeichnet**,
daß als geschmacksprägende Zutaten auf italienische Art eingelegte Artischockenherzen mit einem Anteil von 5 Masse-% oder mehr und frische Petersilie mit einem Anteil von 2 Masse-% oder mehr vorgesehen sind.

17. Frischkäsezubereitung nach Anspruch 2 und 3 oder 5,
**dadurch gekennzeichnet**,
daß als geschmacksprägende Zutaten Oliven mit einem Anteil von 5 Masse-% oder mehr und frische rote Zwiebeln mit einem Anteil von 2 Masse-% oder mehr vorgesehen sind.
